# EUROPEAN PATENT APPLICATION

(11) **EP 4 421 962 A1**
(43) Date of publication of application: **28.08.2024**
(21) Application number: 22948227.8
(22) Date of filing: 27.06.2022
(51) Int. Cl.: H01M 50/271, H01M 50/258

(54) **BATTERY AND ELECTRIC DEVICE**

(71) Applicant: Contemporary Amperex Technology Co., Limited, Ningde, Fujian 352100 (CN)
(72) Inventor: CHEN, Xingdi, Ningde, Fujian 352100 (CN); LONG, Chao, Ningde, Fujian 352100 (CN); WANG, Peng, Ningde, Fujian 352100 (CN)
(74) Representative: Gong, Jinping
(86) International application number: PCT/CN2022/101517
(87) International publication number: WO 2024/000103

(57) **Abstract**

Embodiments of the present application provide a battery and an electrical apparatus. The battery includes a box body, a cover body, battery cells, and a carrying assembly. A bottom of the box body is provided with an opening. The cover body covers the opening, and is fixedly connected to the box body. A plurality of battery cells are arranged in the box body, and a top cover plate of each of the battery cells faces the opening and is arranged upside down in the box body. The carrying assembly is arranged between the battery cells and the cover body to support and carry the battery cells. According to the embodiments of the present application, the structural stability and the safety of the battery can be improved.

## Description

### Technical Field

The present application relates to the technical field of batteries, and in particular to a battery and an electrical apparatus.

### Background

In recent years, the emergence of new energy vehicles has played a huge role in promoting social development and environmental protection. Power batteries, which are rechargeable batteries, are the power source of new energy vehicles and are widely used in the field of new energy vehicles.

In the prior art, the energy density of the battery is not high, resulting in waste of space, which in turn affects the performance of the electrical apparatus. Moreover, the rigidity of the existing battery is poor, resulting in the battery being prone to thermal runaway during collisions, which affects the safety of the electrical apparatus.

### Summary of the Invention

Embodiments of the present application provide a battery and an electrical apparatus, which can improve the energy density and the safety of the battery.

In a first aspect, the embodiments of the present application provide a battery, including a box body, a cover plate, battery cells, and a carrying assembly. A bottom of the box body is provided with an opening. The cover body covers the opening, and is fixedly connected to the box body. A plurality of battery cells are arranged in the box body, and a top cover plate of each of the battery cells faces the opening and is arranged upside down in the box body. The carrying assembly is arranged between the battery cells and the cover body to support and carry the battery cells.

In the above technical solution, the opening is arranged at the bottom of the box body, the battery cells are arranged in the box body, the top cover plate is arranged to face the opening, the cover body covers the opening, and the carrying assembly is arranged between the battery cells and the cover body to support the battery cells, so that the rigidity of the battery as a whole can be enhanced, reducing the probability of damage to the battery in a collision, and improving the safety of the battery.

In some embodiments, the carrying assembly includes a main plate and a carrying strip connected to the main plate, the main plate abuts against the cover body, and the carrying strip abuts against the battery cells.

In the above technical solution, the carrying strip can function to support and carry the battery cells.

In some embodiments, the carrying strip is provided with a plurality of carrying assemblies, and the plurality of carrying strips are arranged at intervals along the main plate in a first direction, and extend in a second direction on the main plate.

In the above technical solution, the plurality of carrying assemblies support the plurality of battery cells to improve the structural stability of the battery.

In some embodiments, the top cover plate includes a functional area and shoulders, the functional area is provided with electrode terminals, the shoulders are located on two sides of the functional area in the first direction, and the battery cell abuts against the carrying strips via the shoulders.

In the above technical solution, the functional area provided with the electrode terminals is located between the shoulders, so that the shoulders can achieve a certain protective effect on the electrode terminals. The battery cell is lap-jointed to the carrying strips by means of the shoulders, so that it is possible to prevent damage to the functional area due to stress, and prolong the service life of the battery cell.

In some embodiments, the electrode terminals are arranged between two adjacent carrying strips, and the electrode terminals are arranged spaced apart from the cover body.

In the above technical solution, the electrode terminals are not in contact with the cover body, so that the electrode terminals easily realize their functions.

In some embodiments, in a thickness direction of the main plate, the carrying strip has a thickness greater than an extension height of the electrode terminal.

In the above technical solution, the electrode terminal is suspended between the carrying strips.

In some embodiments, the shoulders of two adjacent battery cells jointly abut against the same carrying strip.

In the above technical solution, the battery cells adjacent to each other in the first direction share the same carrying strip, so that it is possible to reduce the number of carrying strips as much as possible and facilitate the manufacture of the carrying assembly.

In some embodiments, in the first direction, a width D1 of the carrying strip and an extension width D2 of the shoulder satisfy: 0.5D2 ≤ D1 ≤ 2D2.

In the above technical solution, the carrying strip is prevented from carrying only the battery cell on one side due to offset, and the carrying strip is only in contact with the shoulders of two adjacent battery cells, while avoiding contact with the functional area to affect the function of the battery cell.

In some embodiments, the functional area is further provided with a pressure relief mechanism, the pressure relief mechanism is arranged spaced apart from the cover body, and the electrode terminals are arranged on two sides of the pressure relief mechanism in the first direction.

In the above technical solution, the pressure relief mechanism is suspended between the carrying strips, so that it is possible to provide a larger pressure relief space for the pressure relief mechanism, reduce the risk caused by the discharge of emissions, and improve the safety of the battery.

In some embodiments, the electrode terminals of two adjacent battery cells are electrically connected to each other via a bus component, and an extension length of one of two adjacent carrying strips is less than that of the other in the second direction, to form an avoidance notch, the avoidance notch being configured to avoid the bus component.

In the above technical solution, the carrying assembly is better adapted to the structure of the battery, facilitating the series connection, parallel or series-parallel of the battery cells.

In some embodiments, the carrying strip is integrally formed with or detachably connected to the main plate, so as to facilitate the manufacture of the carrying assembly or adjust the position of the carrying strip according to the arrangement of the battery cells.

In some embodiments, the main plate is fixedly connected to the cover body to increase the structural firmness of the battery.

In some embodiments, the carrying assembly is made of an insulating material, or a surface of the carrying assembly is covered with an insulating material.

In some embodiments, in a thickness direction of the main plate, a thickness of the carrying strip is a first dimension H1, the first dimension H1 satisfying 5 mm ≤ H1 ≤ 30 mm.

In some embodiments, a ratio H1/M of the first dimension H1 to the weight M of a single battery cell satisfies 0.5 mm/Kg <_ H1/M ≤ 50 mm/ Kg.

In a second aspect, the embodiments of the present application provide an electrical apparatus, including a battery cell according to any one of the embodiments in the first aspect, the battery cell being configured to supply electric energy.

### Description of Drawings

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without any creative effort.
Fig. 1 is a schematic structural view of a vehicle provided in some embodiments of the present application;
Fig. 2 is a schematic structural view of a battery according to some embodiments of the present application in an assembled state;
Fig. 3 is a schematic exploded view of a battery according to some embodiments of the present application;
Fig. 4 is a schematic structural view of a carrying assembly of a battery according to some embodiments of the present application;
Fig. 5 is a schematic structural view of a battery cell of a battery according to some embodiments of the present application;
Fig. 6 is a schematic cross-sectional view of the battery shown in Fig. 2;
Fig. 7 is an enlarged schematic view of circle B in Fig. 6;
Fig. 8 is a schematic structural view of a collision test device for performing a collision test on a battery according to some embodiments of the present application;
Fig. 9 is a schematic structural view of a cover body of a battery according to some embodiments of the present application; and
Fig. 10 is a schematic structural view of the interior of a battery cell according to some embodiments of the present application.

The reference signs in Detailed Description are as follows:
1000, vehicle; 100, battery; 200, controller; 300, motor; 1, box body; 101, top; 102, bottom; 103, opening; 11, support plate; 12, side plate; 2, cover body; 21, main body portion; 22, matching portion; 3, battery cell; 301, functional area; 302, shoulder; 31, top cover plate; 311, electrode terminal; 312, pressure relief mechanism; 32, case; 33, electrode assembly; 34, bus component; 4, carrying assembly; 41, main plate; 42, carrying strip; 43, avoidance notch;
A, collision test device; A1, impact head; A2, launching device; A3, rack;
X, first direction; Y, second direction; Z, third direction.

### Detailed Description

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more (including two).

The term "parallel" in the present application includes not only the absolutely parallel situation, but also the roughly parallel situation that is generally recognized in engineering; moreover, the term "perpendicular" not only includes the absolutely perpendicular situation, but also includes the roughly perpendicular situation that is generally recognized in engineering.

In the present application, the battery cell may include a lithium-ion secondary battery cell, a lithium-ion primary battery cell, a lithium sulfur battery cell, a sodium lithium-ion battery cell, a sodium-ion battery cell, a magnesium-ion battery cell, or the like, which will not be limited in the embodiments of the present application.

In the present application, the battery refers to a single physical module that includes one or more battery cells to provide higher voltage and capacity. For example, the battery mentioned in the present application may be a battery module, a battery pack, or the like. The battery generally includes a box body for packaging one or more battery cells. The box body can prevent liquid or other foreign matters from affecting charging or discharging of the battery cells. In the battery, a plurality of battery cells may be connected in series, in parallel or in series-parallel. The series-parallel connection means that some of the plurality of battery cells are connected in series and some are connected in parallel. A plurality of battery cells may be directly connected in series or in parallel or in series-parallel, and then an entirety composed of the plurality of battery cells may be accommodated in the box body. Of course, the battery may alternatively consist in that a plurality of battery cells are first connected in series, in parallel or in series-parallel to form a plurality of batteries, and the plurality of batteries are then connected in series or in parallel or in series-parallel to form a whole, and are accommodated in the box body.

At present, from the development of market situation, the application of traction batteries is becoming more and more extensive. Power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

In the related art, the opening of the box body of the battery usually faces upward in the vertical direction, the battery cells are fixed to the bottom of the battery, and electrode terminals face a cover body which covers the opening of the box body.

However, in the battery configured as above, the inventors have noticed that when the battery is arranged in an electrical apparatus, the bottom is bonded to the electrical apparatus, and the battery cells are fixed to the bottom of the battery, so that the top of the battery that is more vulnerable to collisions has a poor rigidity, and when the battery is in a collision, the battery cells therein are subjected to uneven stress, so that the battery is likely to be damaged, resulting in poor safety of the battery and affecting the performance of the battery.

In view of this, the embodiments of the present application provide a battery, in which an opening is arranged at a bottom of a box body, battery cells are arranged upside down in the box body, a top cover plate is arranged to face the opening, a cover body covers the opening, and a carrying assembly is arranged between the battery cells and the cover body to support the battery cells, so that the rigidity of the battery as a whole can be enhanced, reducing the probability of damage to the battery in a collision, and improving the safety of the battery. Moreover, by adjusting the ratio of the thickness of the carrying assembly to the weight of the battery cell, the overall structural strength of the battery can be adjusted while ensuring the energy density of the battery, and the performance of the battery can be further improved.

The technical solutions described in the embodiments of the present application are applicable to batteries and electrical apparatus powered by the batteries.

The electrical apparatus may be, but not limited to, a vehicle, a mobile phone, a portable device, a laptop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical apparatus is not specially limited in the embodiments of the present application.

It should be understood that the technical solutions described in the embodiments of the present application are not merely applicable to the electrical apparatus described above. However, for the sake of brevity, the following embodiments will be described by taking an electric vehicle 1000 as an example.

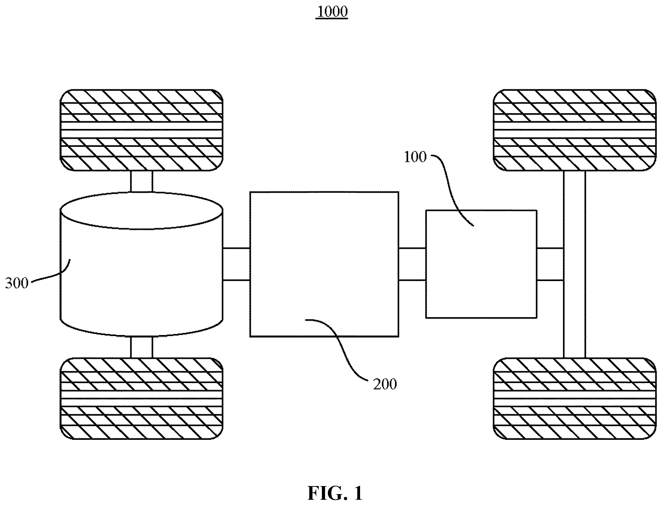

Fig. 1 is a schematic structural view of a vehicle 1000 provided in some embodiments of the present application. As shown in Fig. 1, the vehicle 1000 may be a fuel vehicle, a gas vehicle or a new energy vehicle. The new energy vehicle may be an all-electric vehicle, a hybrid vehicle, an extended-range vehicle, etc. The interior of the vehicle 1000 is provided with a battery 100. The battery 100 may be provided at the bottom or head or tail of the vehicle 1000.

The battery 100 may be configured to supply power to the vehicle 1000. For example, the battery 100 may be used as an operation power supply of the vehicle 1000. The vehicle 1000 may further include a controller 200 and a motor 300. The controller 200 is configured to control the battery 100 to power the motor 300. For example, the controller is used for meeting the operating power demand when the vehicle 1000 is starting, navigating and driving. In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

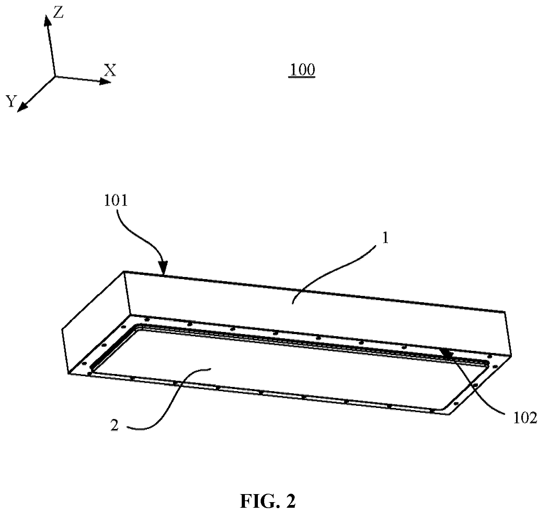

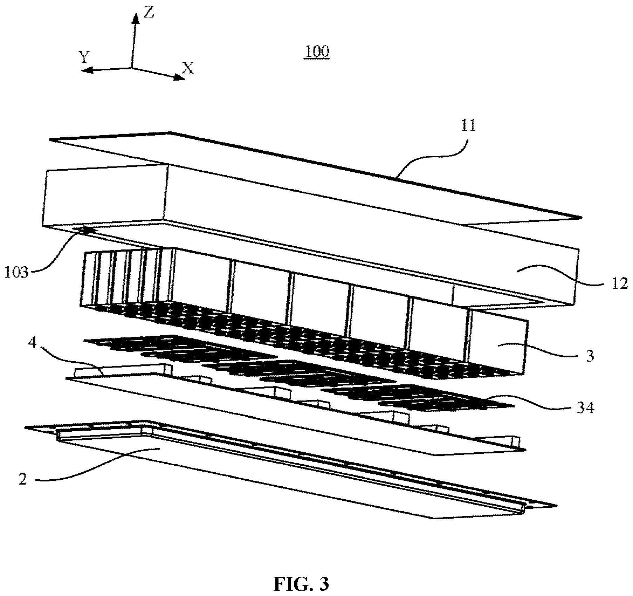

Fig. 2 is a schematic structural view of a battery 100 according to some embodiments of the present application in an assembled state. Fig. 3 is a schematic exploded view of a battery 100 according to some embodiments of the present application. As shown in Figs. 2 and 3, according to some embodiments of the present application, a battery 100 includes a box body 1, a cover body 2, battery cells 3, and a carrying assembly 4. A bottom 102 of the box body 1 is provided with an opening 103. The cover body 2 covers the opening 103 and is fixedly connected to the box body 1. A plurality of battery cells 3 are arranged in the box body 1, and a top cover plate 31 of each of the battery cells 3 faces the opening 103 and is arranged upside down in the box body 1. The carrying assembly 4 is arranged between the battery cells 3 and the cover body 2 to support and carry the battery cells 3.

The opening 103 of the box body 1 is arranged at the bottom 102, the bottom 102 indicates the bottom 102 in the thickness direction of the box body 1, and the opening 103 faces downward in the thickness direction of the box body 1. For ease of description, in the embodiments of the present application, the thickness direction of the box body 1 is taken as a third direction, that is, the Z direction. The box body 1 also has a top 101 in the third direction Z, and the top 101 and the bottom 102 are opposite each other in the third direction Z. It should be understood that in order to indicate the arrangement direction of the battery cells 3 and other factors, a first direction and a second direction will be defined below in detail, and no further description will be made here.

The cover body 2 covers the opening 103 and is fixedly connected to the box body 1. The cover body 2 is arranged at the bottom 102 of the box body 1 and covers the opening 103. The plurality of battery cells 3 are arranged in the box body 1, and the top cover plate 31 of each of the battery cells 3 faces the opening 103. That is, the bottom of the battery cell 3 is arranged at the top 101 of the box body 1 in the third direction Z, and the top cover plate 31 at the top of the battery 100 is arranged to face the bottom 102, which indicates that the battery cell 3 and the box body 1 are arranged upside down with respect to each other in the third direction Z. By arranging the battery cell 3 and the box body 1 upside down with respect to each other, the battery cell 3 can be arranged at the top 101 of the battery 100, thereby increasing the rigidity of the top 101 of the battery 100 and increasing the safety of the battery 100. Moreover, the top cover plate 31 of the battery cell 3 faces the bottom 102 of the battery 100, so that it is possible to increase the energy density of the battery 100 and improve the usability of the battery 100.

Where the top cover plate 31 of the battery cell 3 faces the opening 103, the top cover plate 31 of the battery cell 3 faces the cover body 2 arranged at the opening 103, and the carrying assembly 4 is arranged between the battery cell 3 and the cover body 2 to support and carry the battery cell 3. Since the carrying assembly 4 is arranged between the battery cell 3 and the cover body 2, the battery cell 3, the carrying assembly 4 and the cover body 2 are arranged in sequence in the third direction Z from top to bottom. The carrying assembly 4 functions to support and carry the battery cell 3, that is, the carrying assembly 4 abuts against the top cover plate 31 of the battery cell 3, so that it is possible to increase the structural strength of the battery 100, improve the stress performance of the battery 100, and reduce the possibility of damage to the battery 100 in a collision.

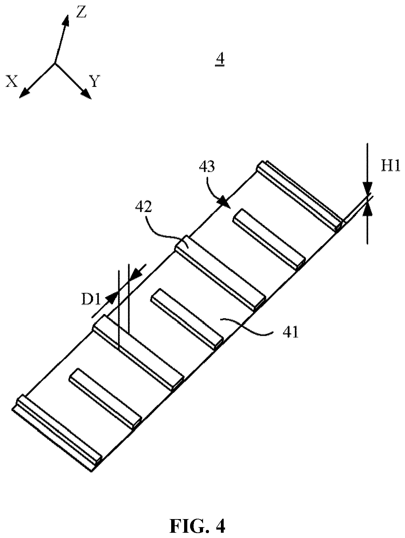

Fig. 4 is a schematic structural view of a carrying assembly 4 of a battery 100 according to some embodiments of the present application. As shown in Fig. 4, in some embodiments of the present application, the carrying assembly 4 includes a main plate 41 and a carrying strip 42, the main plate 41 abuts against the cover body 2, and the carrying strip 42 abuts against the battery cells 3.

By abutment means that the main plate 41 and the cover body 2, and the carrying strip 42 and the battery cells 3 are in contact with each other but are not fixed to each other. The main plate 41 abuts against the cover body 2, and the carrying strip 42 abuts against the battery cells 3, that is, the carrying assembly 4 abuts against the cover body 2 and the battery cells 3 respectively, so as to provide support forces for the battery cells 3 and keep a distance between the battery cells 3 and the cover body 3.

In some embodiments of the present application, a plurality of carrying strips 42 are provided, and the plurality of carrying strips 42 are arranged at intervals along the main plate 41 in a first direction, and extend in a second direction on the main plate 41.

The carrying strip 42 is formed in a strip shape and extends in the second direction. The plurality of carrying strips 42 are arranged on the main plate 41 at intervals in the first direction, that is, the carrying strips 42 are arranged in the first direction to support the battery cells 3 at a plurality of positions. The first direction and the second direction are directions perpendicular to each other. Since the carrying assembly 4 is arranged parallel to the top 101 and the bottom 102 of the box body 1 in the third direction Z, the first direction, the second direction and the third direction Z are perpendicular to one another. For the convenience of description, in the following content, the first direction and the second direction are respectively referred to as the X direction and the Y direction. It can be understood that when the included angle between the first direction X, the second direction Y and the third direction Z is 85°-95°, the first direction X, the second direction Y and the third direction Z are considered perpendicular to one another. It should be understood that the first direction X, the second direction Y and the third direction Z may also be other directions perpendicular to one another.

The carrying strip 42 is arranged on the side of the main plate 41 close to the battery cells 3, and protrudes toward the battery cell 3 in the third direction Z, so as to abut against the battery cells 3. Therefore, the carrying strip can function to support and carry the battery cells 3, improving the structural stability of the battery 100.

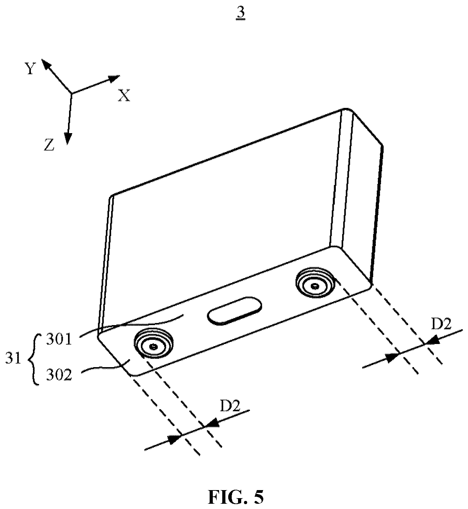

Fig. 5 is a schematic structural view of a battery cell 3 according to an embodiment of the present application. As shown in Fig. 5, in some embodiments of the present application, the top cover plate 31 includes a functional area 301 and shoulders 302, the functional area 301 is provided with electrode terminals 311, the shoulders 302 are located on two sides of the functional area 301 in the first direction X, and the battery cell 3 is lap-jointed to the carrying strips 42 via the shoulders 302.

The functional area 301 indicates that the top cover plate 31 is provided with an area that enables the battery cell 3 to realize its own function, or an area that enables the battery cell 3 to interact with the outside, for example, the electrode terminals 311 that enable the battery cell 3 to be electrically connected to the outside. Since the functional area 301 is often provided with the electrode terminals 311 and other components, the functional area 301 should not be subjected to stress during the use of the battery 100. The shoulder 302 indicates the area of the top cover plate 31 that can be subjected to stress except the functional area 301.

Arranging the functional area 301 provided with the electrode terminals 311 between the shoulders 302 can make the shoulders 302 achieve a certain protective effect on the functional area 301. The battery cell 3 is lap-jointed to the carrying strips 42 via the shoulders 302, so that it is possible to prevent the electrode terminals 311 of the functional area 301 from being damaged due to stress, and prolong the service life of the battery cell 3.

In some embodiments of the present application, the electrode terminals 311 are arranged between two adjacent carrying strips 42, and the electrode terminals 311 are spaced apart from the cover body 2.

Since the functional area 301 is located between the two shoulders 302, and the shoulders 302 are lap-jointed to the carrying strips 42, the electrode terminals 311 of the functional area 301 are also located between the two adjacent carrying strips 42. The electrode terminals 311 are spaced apart from the cover body 2, that is, the electrode terminals 311 are not in contact with the cover body 2. The electrode terminals 311 can be considered as being suspended between the two carrying strips 42, so as to extract the electric energy from the battery cell 3 through the electrode terminals 311 and improve the usability of the battery cell 3.

In some embodiments of the present application, in a thickness direction of the main plate 41, the carrying strip 42 has a thickness greater than an extension height of the electrode terminal 311.

The thickness direction of the main plate 41 is also the thickness direction of the box body 1, that is, the third direction Z. In the third direction Z, the thickness of the carrying strip 42 is greater than the extension height of the electrode terminals 311, so that the electrode terminals 311 can be suspended between the adjacent carrying strips 42, so as to avoid contact with other components to affect the function.

In some embodiments of the present application, the shoulders 302 of two adjacent battery cells 3 are jointly lap jointed to the same carrying strip 42.

In the box body 1, one battery cell 3 may be provided, or a plurality of battery cells 3 may be provided. Where a plurality of battery cells 3 are arranged in the box body 1, the plurality of battery cells 3 are arranged adjacent to each other in the box body 1. Since the carrying strips 42 are arranged at intervals along the main plate 41 in the first direction X, the shoulders 302 are located on two sides of the functional area 301 in the first direction X, so that each shoulder 302 can be located at the connection between the adjacent battery cells 3, and the shoulders 302 of two adjacent battery cells 3 can thus be jointly lap-jointed to the same carrying strip 4.

The battery cells 3 adjacent to each other in the first direction X share the same carrying strip 42, so that it is possible to reduce the number of carrying strips 42 as much as possible and facilitate the manufacture of the carrying assembly 4.

In some embodiments of the present application, in the first direction X, a width D1 of the carrying strip 42 and an extension width D2 of the shoulder 302 satisfy: 0.5D2 ≤ D1 ≤ 2D2.

When the width D1 of the carrying strip 42 is greater than or equal to 0.5 times the extension width D2 of the shoulder 302, sufficient support force can be provided for the battery cell 3. When the carrying strip 42 carries two adjacent battery cells 3 at the same time, the width of the carrying strip 42 in the length direction X is less than or equal to 2 times the extension width of the shoulder 302, so that the carrying strip 42 can only be in contact with the shoulders 302 of the two adjacent battery cells 3, so as to avoid contact with the functional area 301 to affect the function of the battery cells 3.

Preferably, the relationship between the width D1 of the carrying strip 42 and the extension width D2 of the shoulder 302 may satisfy D2 ≤ D1 ≤ 2D2. Since the carrying strip 42 may be offset between adjacent battery cells 3, the width of the carrying strip 42 in the length direction X is greater than or equal to the extension width of the shoulder 302, so that the carrying strip 42 can carry two adjacent battery cells 3 at the same time, without the problem of poor structural stability of the battery 100 due to uneven stress when only one of the two adjacent battery cells can be carried due to offset.

In some embodiments of the present application, the functional area 301 is further provided with a pressure relief mechanism 312, the pressure relief mechanism 312 is arranged spaced apart from the cover body 2, and the electrode terminals 311 are arranged on two sides of the pressure relief mechanism 312 in the first direction X.

The pressure relief mechanism 312 refers to an element or component that is actuated when an internal pressure of the battery cell 3 reaches a predetermined threshold so as to release the internal pressure. That is, when the internal pressure of the battery cell 3 reaches a predetermined threshold, the pressure relief mechanism 312 generates an action or is activated into a certain state, such that the internal pressure of the battery cell 3 can be released. The action generated by the pressure relief mechanism 312 may include, but not limited to, at least a part of the pressure relief mechanism 312 being fractured, broken, torn or opened, so as to form an opening, a channel or the like for releasing the internal pressure. In this case, high-temperature and high-pressure substances inside the battery cell 3 are discharged outwards from an actuated position as emissions. In this way, the pressure in the battery cell 3 can be released at a controllable pressure, thereby avoiding potential, more serious accidents. The pressure relief mechanism 312 may take the form of an explosion-proof valve, a gas valve, a pressure relief valve, a safety valve or the like, and may specifically use a pressure sensitive element or structure.

Arranging the electrode terminals 311 on two sides of the pressure relief mechanism 312 can reduce the influence of the pressure relief mechanism 312 on the electrode terminals 311 during pressure relief. Moreover, the pressure relief mechanism 312 is arranged spaced apart from the cover body 2, that is, the pressure relief mechanism 312 is not in contact with the cover body 2, thereby providing a larger pressure relief space for the pressure relief mechanism 312, reducing the risk caused by the discharge of emissions. and improving the safety of the battery 100.

Referring to Fig. 4 again, as shown in Fig. 4, in some embodiments of the present application, the electrode terminals 311 of two adjacent battery cells 3 are electrically connected to each other via a bus component 34, and an extension length of one of two adjacent carrying strips 42 is less than that of the other in the second direction Y, to form an avoidance notch 43. The avoidance notch 43 is configured to avoid the bus component 34.

The bus component 34 is a component that enables the electrical connection between the plurality of battery cells 3. The bus component 34 bridges the electrode terminals 311 of adjacent battery cells 3 to connect the plurality of battery cells 3 in series, in parallel or in series-parallel. Since the bus component 34 bridges the electrode terminals 311 of adjacent battery cells 3 in the first direction X, at least a part of the carrying strip 42 extending in the second direction Y needs to avoid the bus component, to form the avoidance notch 43.

The extension length of one of the two adjacent carrying strips 42 is smaller than that of the other, that is, the carrying strips 42 with longer extension lengths and the carrying strips 42 with shorter extension lengths are alternately distributed. Optionally, the lengths of the carrying strips 42 may also be adjusted according to the arrangement of the bus component 34. Moreover, the extension length of the carrying strip 42 in the second direction Y merely indicates the total length of the carrying strip 42 in the second direction Y, that is to say, the avoidance notch 43 may be arranged at one end of the carrying strip 42, or may be arranged in the middle of the carrying strip 42, depending on the arrangement of the bus component 34, which will not be specially limited in the embodiments of the present application.

Providing the avoidance notch 43 at the carrying strip 42 can make the carrying assembly 4 better adapt to the structure of the battery 100, facilitating the series, parallel or series-parallel connection of the battery cells 3.

In some embodiments of the present application, the carrying strip 42 is integrally formed with or detachably connected to the main plate 41.

Where the carrying strip 42 is integrally formed with the main plate 41, the manufacture of the carrying assembly 4 can be facilitated. Where the carrying strip 42 is detachably connected to the main plate 41, the position of the carrying strip 42 can be adjusted according to the arrangement of the battery cells 3, so that the carrying assembly 4 has a wider range of use scenarios.

In some embodiments of the present application, the main plate 41 may be fixedly connected to the cover body 2, to increase the structural firmness of the battery 100. Optionally, the main plate 41 may abut against the cover body 2, which will not be limited in the embodiments of the present application.

In some embodiments of the present application, the carrying assembly 4 is made of an insulating material, or a surface of the carrying assembly 4 is covered with an insulating material.

In order to avoid affecting the electrical connection between the battery cells 3, the carrying assembly 4 is an insulating member. It can be understood that, the carrying assembly 4 may be made of an insulating material as a whole, or may be an object whose surface is coated with an insulating material so as to exhibit insulation properties as a whole. When the carrying assembly 4 is an object whose surface is covered with an insulating material, a core material may be a metal material, an insulating material, a composite material, etc., and an outer surface of the core material is covered with the insulating material. In addition, the carrying assembly 4 should have a certain hardness and elasticity so as to provide a supporting effect on the battery cells 3, and can also produce a certain amount of deformation when impacted, so as to protect the battery cells 3.

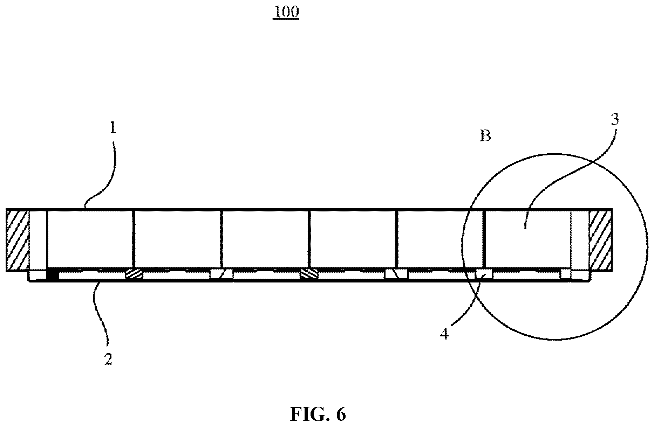

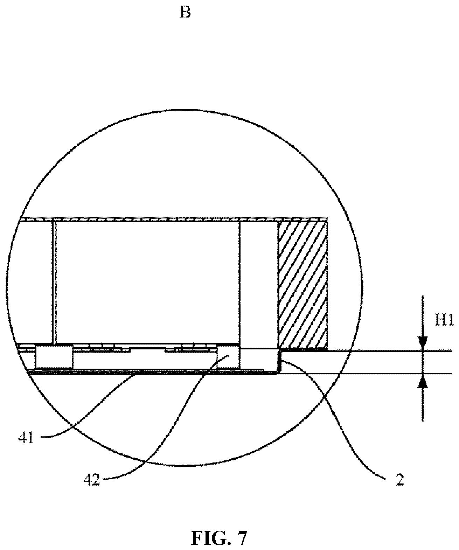

Fig. 6 is a schematic cross-sectional view of the battery shown in Fig. 2. Fig. 7 is an enlarged schematic view of circle B in Fig. 6. As shown in Figs. 6 and 7, in some embodiments of the present application, in the thickness direction of the main plate 41, the thickness of the carrying strip 42 is a first dimension H1, the first dimension H1 satisfying 5 mm ≤ H1 ≤ 30 mm.

The thickness direction of the main plate 41 is also the thickness direction of the box body 1, that is, the third direction Z. The carrying strip 42 has a certain thickness in the third direction Z, so that it can protrude from the main plate 41 to support and carry the battery cells 3. The carrying strip 42 maintains the first dimension, so that it is possible for the top cover plate 31 of the battery cell 3 to be kept at a certain distance from the cover body 2, so as to keep the energy density of the battery 100 moderate.

In some embodiments of the present application, a ratio H1/M of the first dimension H1 to the weight M of a single battery cell 3 satisfies 0.5 mm/Kg < H1/M ≤ 50 mm/Kg.

The ratio H1/M of the first dimension H1 to the weight M of a single battery cell 3 can indicate the energy density and the structural strength of the battery 100. When the ratio of the first dimension H1 to the weight M of a single battery cell 3 is too large, the energy density of the battery 100 will be too low accordingly. When the ratio of the first dimension H1 to the weight M of a single battery cell 3 is too small, the structural strength of the battery 100 will be insufficient accordingly, and a safety accident may occur in a collision. Therefore, the range of the ratio H1/M of the first dimension H1 to the weight M of a single battery cell 3 satisfies 0.5 mm/Kg <_ H1/M ≤ 50 mm/Kg. Preferably, the range of H1/M satisfies 1 mm/Kg <_ H1/M ≤ 30 mm/Kg. Within this value range, the battery 100 has a good energy density and an appropriate structural strength.

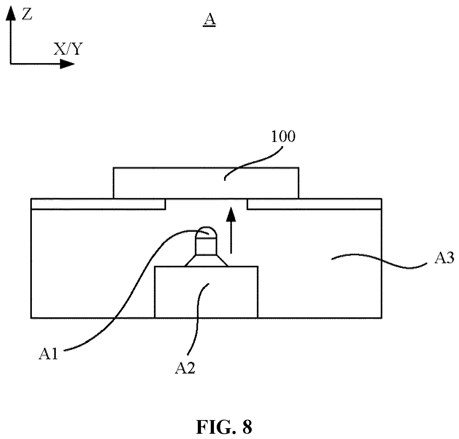

Fig. 8 is a schematic structural view of a collision test device A for performing a collision test on a battery 100 according to some embodiments of the present application; To verify that a battery 100 having the ratio H1/M of the first distance H1 to the weight M of a single battery cell 3 within an appropriate range has a good performance, illustratively, a collision test is performed on the battery 100 by a collision test device A. As shown in Fig. 8, the collision test device A includes an impact head A1, a launching device A2 and a rack A3. During the test, the battery 100 is placed on the rack A3, such that the impact head A1 is driven by the launching device A2, and impacts on the battery 100 at a certain speed. Test conditions may be selected as follows: an impact direction is the third direction Z, an impact position is a weak point of the battery 100, and an impact energy is 90J.

Since the battery 100 is applied to an electrical apparatus such as a vehicle 1000, the top 101 is mounted to the vehicle 1000, and the bottom 102 of the battery 100 is impacted in the third direction Z, so that the scene after the battery 100 is mounted to the vehicle 1000 can be simulated. The weak point of the battery 100 indicates a vulnerable position of the battery 100, which is usually within a radius of 240 mm from the geometric center of the battery 100, and impacting the weak point of the battery 100 which can simulate the state of the battery 100 after the position of the battery 100 that has a weak structural strength is impacted. The impact energy of 90J can be equivalent to the impact head A1 impacting the battery 100 at a speed of 4.2 m/s. It can be understood that another impact energy can also be used to impact the battery 100, for example, 120J (at an impact speed 4.9 m/s) or 150J (at an impact speed 5.5 m/s). During the actual experiment, the battery 100 may be impacted multiple times with one impact energy, or the battery 100 may be impacted multiple times with multiple impact energies.

After the battery 100 is impacted by the collision test device A, it is observed at the ambient temperature for 2 hours to detect whether the battery 100 catches fire or explodes. Optionally, after the battery 100 is subjected to a collision test with the collision test device A, the battery 100 may also be tested for the enclosure protection level, which will not be limited in the embodiments of the present application.

Table 1 shows the test results of the collision test on the battery 100 by using the above method when the first distance H1, the weight M of a single battery cell 3 and the value of H1/M are respectively different.

**Table 1**

| No. | H1 (mm) | M (Kg) | H1/M (mm/Kg) | Collision test |
|---|---|---|---|---|
| Example 1 | 5 | 10 | 0.5 | No fire, no explosion |
| Example 2 | 10 | 5 | 2 | No fire, no explosion |
| Example 3 | 15 | 3 | 5 | No fire, no explosion |
| Example 4 | 30 | 1 | 30 | No fire, no explosion |
| Example 5 | 25 | 0.5 | 50 | No fire, no explosion |
| Comparative Example 1 | 3 | 5 | 0.2 | Fire, explosion |
| Comparative Example 2 | 52 | 1 | 52 | Fire, explosion |

As shown in Table 1, when H1 satisfies 5 mm ≤ H1 ≤ 30 mm, and H1/M satisfies 0.5 mm/Kg <_ H1/M ≤ 50 mm/Kg, the battery 100 will not catch fire or explode in a collision test of a certain intensity, and thus has a better safety.

In some other optional embodiments, the battery cell 3 may also not be lap-jointed to the carrying strip 42, but fixedly connected to the carrying strip 42.

In this case, the first dimension H1 satisfies 0.5 mm ≤ H1 ≤ 30 mm, and the ratio H1/M of the first dimension H1 to the weight M of a single battery cell 3 satisfies 0.05 mm/Kg < H1/M ≤ 50 mm/Kg. Within this value range, the battery 100 has a good energy density and an appropriate structural strength.

To verify that a battery 100 having the ratio H1/M of the first dimension H1 to the weight M of a single battery cell 3 within an appropriate range has a good performance, a structural strength test may performed on the battery 100. During the structural strength test of the battery 100, illustratively, the structural strength of the battery 100 may be determined through a plurality of tests such as a shear strength test and a compressive strength test.

In the shear strength test, illustratively, the battery 100 may be fixed between clamps of a shear tester, then a detection head of the shear tester is used to drive the battery 100 to move in the first direction X or in the second direction Y at a speed of 5 mm/min, and a pulling force F exerted by the detection head is recorded when the box body 1 is damaged. Taking a projection area of the battery 100 in the third direction Z as an area A, the value of F/A is the shear strength that the battery 100 can withstand.

In the compressive strength test, illustratively, a pressing head may be used to apply pressure to the battery 100 in the third direction Z and in the first direction X or in the second direction Y, advances toward the battery 100 at a speed of 2 m/s, and is stopped for 10 minutes after a pressing force reaches 50 KN or the deformation of the battery 100 reaches 30%, and the battery 100 is left standing and observed at the ambient temperature for 2 hours after the compressive strength test.

Optionally, the structural strength of the battery 100 may be tested through other structural strength tests, which will not be limited in the embodiments of the present application.

Table 2 shows the test results of the structural strength of the battery 100 by using the above method when the first distance H1, the weight M of a single battery cell 3 and the value of H1/M are respectively different, with the battery cells 3 being fixed to the carrying strip 42.

**Table 2**

| | H1 (mm) | M (Kg) | H1/M (mm/Kg) | Structural strength test |
|---|---|---|---|---|
| Example 1 | 0.5 | 10 | 0.05 | Fair |
| Example 2 | 5 | 5 | 1 | Fair |
| Example 3 | 10 | 4 | 2.5 | Good |
| Example 4 | 10 | 2 | 5 | Good |
| Example 5 | 20 | 1 | 20 | Excellent |
| Example 6 | 30 | 0.6 | 50 | Fair |
| Comparative Example 1 | 0.2 | 5 | 0.04 | Poor |
| Comparative Example 2 | 52 | 1 | 52 | Poor |

As shown in Table 2, when H1 satisfies 0.5 mm ≤ H1 ≤ 30 mm, and H1/M satisfies 0.05 mm/Kg < H1/M ≤ 50 mm/Kg, the battery 100 has a better structural strength in the structural strength test.

It should be understood that the above descriptions of some embodiments of the battery 100 are only illustrative, and the battery 100 may also have other structures.

Referring to Figs. 2 and 3 again, as shown in Figs. 2 and 3, the box body 1 includes a support plate 11 and side plates 12, the support plate 11 is arranged at the top 101, and the side plates 12 are distributed along the periphery of the opening 103. That is, the support plate 11 and the side plates 12 are arranged in sequence from top to bottom in the third direction Z, the support plate 11 is a plate body extending in the first direction X, and the side plates 12 are plate bodies extending in the third direction Z. The side plates 12 are arranged around the support plate 11, and the opening 103 is formed at the bottom 102, so that the box body 1 is formed into a hollow structure. The battery cells 3 are arranged at the support plate 11, so that it is possible to increase the rigidity of the top 101 of the battery 100 and reduce the possibility of damage to the battery 100 in a collision.

Optionally, the side plates 12 may be integrally formed with the support plate 11, or may be fixedly connected to the support plate 11 by at least one of welding, bonding, fastening or flow drill screwing processes, which will not be limited in the embodiments of the present application.

In some optional embodiments, a channel (not shown in the figures) is buried inside the support plate 11. Since the battery cells 3 are arranged at the support plate 11, and the bottom 102 of each battery cell 3 is in contact with the support plate 11, for the consideration of the performance of the battery 100, a channel is buried inside the support plate 11, and a gas or liquid as a heat medium passes through the channel, so that it is possible to have a battery 100 temperature regulation effect on the battery 100 during operating of the battery 100, thereby prolonging the service life and improving the usability of the battery 100.

In some other optional embodiments, a channel may be provided between the battery cell 3 and the support plate 11 as a thermal management component, or be formed as any other component that can be configured to provide a temperature regulation function for the battery 100, which will not be limited in the embodiments of the present application here.

In some optional embodiments, the box body 1 may be a simple three-dimensional structure such as a cuboid or a cylinder, or a complex three-dimensional structure composed of simple three-dimensional structures such as a cuboid or a cylinder. The material of the box body 1 may be an alloy material such as an aluminum alloy and an iron alloy, or may be a polymer material such as polycarbonate and polyisocyanurate foam, or may be a composite material such as a combination of glass fiber and epoxy resin. In order to improve the sealing performance of the box body 1, a sealing member, such as a sealant and a sealing ring, may also be provided between the cover body 2 and the side plates 12. The above feasible configurations are not limited in the embodiments of the present application.

In some other optional embodiments, in the battery 100, there may be a plurality of battery cells 3, and the plurality of battery cells 3 may be connected in series or in parallel or in series-parallel. The series-parallel connection means that some of the plurality of battery cells 3 are connected in series and some are connected in parallel. A plurality of battery cells 3 may be directly connected in series or in parallel or in series-parallel, and then an entirety composed of the plurality of battery cells 3 may be accommodated in the box body 1. Of course, the battery 100 may alternatively consist in that a plurality of battery cells 3 are first connected in series, in parallel or in series-parallel to form a plurality of battery 100 modules, and the plurality of battery 100 modules are then connected in series or in parallel or in series-parallel to form a whole, and are accommodated in the box body 1.

Each battery cell 3 may be a secondary battery or a primary battery; or may be a lithium-sulfur battery, a sodium-ion battery or a magnesium-ion battery, but is not limited thereto. The battery cell 3 may be in the shape of a cylinder, a flat body, a cuboid or others.

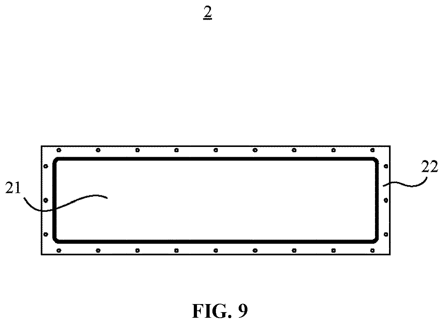

Fig. 9 is a schematic structural view of a cover body 2 of a battery 100 according to some embodiments of the present application. As shown in Fig. 9, according to some embodiments of the present application, the box body 1 further includes a cover body 2 arranged at the opening 103, and the cover body 2 is fixedly connected to the side plates 12 to cover the opening 103, so that the box body 1 has a relatively sealed structure.

The cover body 2 includes a main body portion 21 and a matching portion 22. The matching portion 22 is arranged in a circumferential direction of the main body portion 21 and match the side plates 12. That is, the main body portion 21 covers the opening 103 formed by the side plates 12, and the matching portion 22 is fixed to the side plates 12 to fixedly connect the cover body 2 to the side plates 12. Optionally, the matching portion 22 may be bolted to the side plate 12, or the matching portion 22 may be fixedly connected to the side plates 12 in other ways.

In the third direction Z, the main body portion 21 protrudes from an extension plane of the bottom 102 relative to the matching portion 22. There is a relatively larger distance between the battery cells 3 arranged inside the box body 1 and the cover body 2, so as to make room for the bus component 34 or the carrying assembly 4. It should be understood that the protruding distance of the main body portion 21 relative to the matching portion 22 should be selected based on the energy density of the battery 100, and should not be too large to increase the volume of the battery 100 while reducing the energy density of the battery 100.

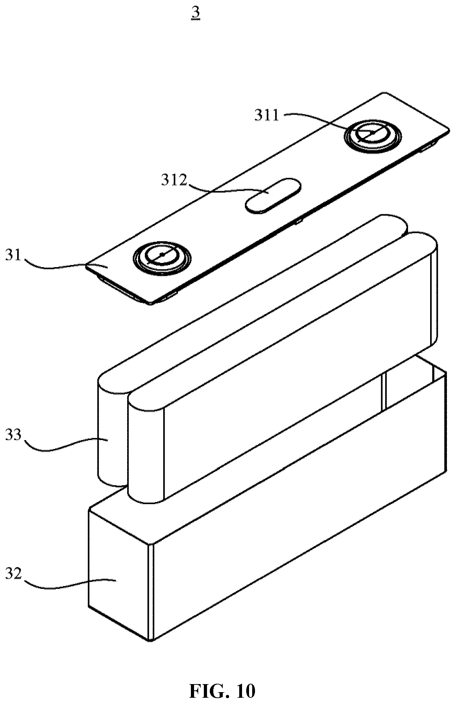

Fig. 10 is a schematic structural view of the interior of a battery cell 3 according to some embodiments of the present application. The battery cell 3 is the smallest unit constituting the battery 100. As shown in Fig. 10, the battery cell 3 further includes a top cover plate 31, a case 32, an electrode assembly 33 and other functional components.

The top cover plate 31 is a component that covers the opening of the case 32 to isolate the internal environment of the battery cell 3 from the external environment. Without limitation, the shape of the top cover plate 31 may be adapted to the shape of the case 32 to match the case 32. Optionally, the top cover plate 31 may be made of a material (such as an aluminum alloy) with a certain hardness and strength, so that the top cover plate 31 is not easy to be deformed when being pressed and collided, the battery cell 3 can have a higher structural strength, and the safety performance can also be improved. The top cover plate 31 is provided with functional components such as electrode terminals 311 and an explosion-proof valve. The electrode terminals 311 may be used for electrical connection with the electrode assembly 33 for outputting or inputting electric energy of the battery cell 3. In some embodiments, the top cover plate 31 may also be provided with a pressure relief mechanism 312 for releasing the internal pressure when the internal pressure or temperature of the battery cell 3 reaches a threshold value. The top cover plate 31 may be made of various materials, such as copper, iron, aluminum, stainless steel, an aluminum alloy, and plastic, which will not be specially limited in the embodiments of the present application. In some embodiments, an insulating member may be also provided on the inner side of the top cover plate 31, and the insulating member may be used to isolate an electrical connection plate in the case 32 from the top cover plate 31 to reduce the risk of short circuit. Illustratively, the insulating member may be made of plastic, rubber or the like.

The case 32 is an assembly for matching the top cover plate 31 to form the internal environment of the battery cell 3. The formed internal environment may be used to accommodate the electrode assembly 33, an electrolyte solution (not shown in the figures) and other components. The case 32 and the top cover plate 31 may be separate components, the case 32 may be provided with an opening, and the internal environment of the battery cell 3 is formed by making the top cover plate 31 cover the opening at the opening. Without limitation, the top cover plate 31 and the case 32 may also be integrated with each other. Specifically, the top cover plate 31 and the case 32 may form a common connection face before other components are inserted into the case. When the interior of the case 32 needs to be packaged, the top cover plate 31 then covers the case 32. The case 32 may have various shapes and sizes, such as a cuboid, a cylinder and a hexagonal prism. Specifically, the case 32 may be shaped according to the specific shape and size of the electrode assembly 33. The case 32 may be made of various materials, such as copper, iron, aluminum, stainless steel, an aluminum alloy, and plastic, which will not be specially limited in the embodiments of the present application.

The electrode assembly 33 is a component of a battery cell 3 where an electrochemical reaction occurs. One or more electrode assemblies 33 may be contained in the case 32. The electrode assembly 33 is mainly formed by winding or stacking a positive electrode sheet and a negative electrode sheet, and a separator is generally provided between the positive electrode sheet and the negative electrode sheet. The parts of the positive electrode sheet and the negative electrode sheet having active materials constitute a main body portion of the electrode assembly 33, and the parts of the positive electrode sheet and the negative electrode sheet having no active materials respectively constitute tabs. The positive tab and the negative tab may be located at one end of the main portion together or at two ends of the main body portion respectively. During the charging or discharging process of the battery 100, the positive active material and the negative active material react with an electrolyte solution, and the tabs are connected to the electrode terminals 311 to form a current loop.

In some optional embodiments of the present application, the battery 100 includes a box body 1, a cover body 2, a plurality of battery cells 3, and a carrying assembly 4. The cover body 2 covers an opening 103 at a bottom 102 of the box body 1, and is fixedly connected to the box body 1. The plurality of battery cells 3 are arranged in the box body 1, and the top cover plate 31 faces the opening 103 and is arranged upside down in the box body 1. The carrying assembly 4 is arranged between the battery cells 3 and the cover body 2, and includes a main plate 41 and a carrying strip 42 connected to the main plate 41. The main plate 41 abuts against the cover body 2, and the carrying strip 42 abuts against the battery cells 3 to support and carry the battery cells 3. A plurality of carrying strips 42 are provided, and the plurality of carrying strips 42 are arranged at intervals along the main plate 41 in a first direction X, and extend in a second direction Y on the main plate 41. The top cover plate 31 of the battery cell 3 includes a functional area 301 provided with electrode terminals 311, and shoulders 302 arranged on two sides of the functional area 301 in the first direction X, and the battery cell 3 abuts against the carrying strips 42 by means of the shoulders 302, so that the electrode terminals 311 are located between adjacent carrying strips 42 and are arranged spaced apart from the cover body 2, so as to protect the electrode terminals 311. In a thickness direction of the main plate 41, that is, a third direction Z, the thickness of the carrying strip 42 is a first dimension H1. When the first dimension H1 satisfies 5 mm ≤ H1 ≤ 30 mm and a ratio H1/M of the first dimension H1 to the weight M of a single battery cell 3 satisfies 0.5 mm/Kg ≤ H1/M ≤ 50 mm/Kg, as shown in Table 1, the battery 100 will not catch fire and explode in a collision test of a certain intensity, and has a better safety.

In some cases, the battery 100 of the embodiments of the present application can increase the rigidity of the box body 1 and increase the energy density of the battery 100 by placing the battery cells 3 upside down in the box body 1. Moreover, supporting and carrying the battery cells 3 by the carrying assembly 4 can enhance the structural strength of the battery 100 and reduce the probability of damage in a collision, so that the battery 100 has a better safety.

It should be noted that the embodiments in the present application and the features of the embodiments can be combined with each other without conflict.

Finally, it should be noted that the above embodiments are merely used for illustrating rather than limiting the technical solutions of the present application. Although the present application has been described in detail with reference to the above embodiments, those of ordinary skill in the art should understood that the technical solutions specified in the above various embodiments can still be modified, or some of the technical features therein can be equivalently substituted; but such modifications or substitutions do not make the essence of the corresponding technical solutions depart from the spirit and scope of the technical solutions of the various embodiments of the present application.

## Claims

1. A battery, comprising:
a box body (1), a bottom (102) of the box body (1) being provided with an opening (103);
a cover body (2) for covering the opening (103), the cover body (2) being fixedly connected to the box body (1);
a plurality of battery cells (3) arranged in the box body (1), a top cover plate (31) of each of the battery cells (3) facing the opening (103) and being arranged upside down in the box body (1); and
a carrying assembly (4) arranged between the battery cells (3) and the cover body (2) to support and carry the battery cells (3).

2. The battery according to claim 1, wherein the carrying assembly (4) comprises a main plate (41) and a carrying strip (42) connected to the main plate (41), the main plate (41) abuts against the cover body (2), and the carrying strip (42) abuts against the battery cells (3).

3. The battery according to claim 2, wherein a plurality of carrying strips (42) are provided, and the plurality of carrying strips (42) are arranged at intervals along the main plate (41) in a first direction, and extend in a second direction on the main plate (41).

4. The battery according to claim 3, wherein the top cover plate (31) comprises a functional area (301) and shoulders (302), the functional area (301) is provided with electrode terminals (311), the shoulders (302) are located on two sides of the functional area (301) in the first direction, and the battery cell (3) abuts against the carrying strips (42) via the shoulders (302).

5. The battery according to claim 4, wherein the electrode terminals (311) are arranged between the two adjacent carrying strips (42), and the electrode terminals (311) are arranged spaced apart from the cover body (2).

6. The battery according to claim 5, wherein, in a thickness direction of the main plate (41), the carrying strip (42) has a thickness greater than an extension height of the electrode terminal (311).

7. The battery according to claim 4, wherein the shoulders (302) of two adjacent battery cells (3) jointly abut against the same carrying strip (42).

8. The battery according to claim 7, wherein, in the first direction, a width D1 of the carrying strip (42) and an extension width D2 of the shoulder (302) satisfy: 0.5D2 ≤ D1 ≤ 2D2.

9. The battery according to claim 5, wherein the functional area (301) is further provided with a pressure relief mechanism (312), the pressure relief mechanism (312) is arranged spaced apart from the cover body (2), and the electrode terminals (311) are arranged on two sides of the pressure relief mechanism (312) in the first direction.

10. The battery according to claim 4, wherein the electrode terminals (311) of the two adjacent battery cells (3) are electrically connected to each other via a bus component (34), and an extension length of one of the two adjacent carrying strips (42) is less than that of the other in the second direction, to form an avoidance notch (43), the avoidance notch (43) being configured to avoid the bus component (34).

11. The battery according to any one of claims 2-3, wherein the carrying strip (42) is integrally formed with or detachably connected to the main plate (41).

12. The battery according to claim 2, wherein the main plate (41) is fixedly connected to the cover body (2).

13. The battery according to claim 1, wherein the carrying assembly (4) is made of an insulating material, or a surface of the carrying assembly (4) is covered with an insulating material.

14. The battery according to claim 2, wherein, in a thickness direction of the main plate (41), a thickness of the carrying strip (42) is a first dimension H1, the first dimension H1 satisfying 5 mm ≤ H1 ≤ 30 mm.

15. The battery according to claim 14, wherein a ratio H1/M of the first dimension H1 to the weight M of the single battery cell (3) satisfies 0.5 mm/Kg < H1/M ≤ 50 mm/ Kg.

16. An electrical apparatus, comprising a battery according to any one of claims 1-15, the battery being configured to supply electric energy.
